# DEMANDE DE BREVET EUROPEEN

(11) **EP 4 397 174 A1**
(43) Date de publication de la demande: **10.07.2024**
(21) Numéro de dépôt: 23220876.9
(22) Date de dépôt: 31.12.2023
(51) Int. Cl.: A01G 17/08

(54) **AGRAFE DE PALISSAGE PERFECTIONNÉE**

(30) Priorité: 05.01.2023 FR 2300121
(71) Demandeur: Agrafes Viti 4.0, 89290 Venoy (FR)
(72) Inventeur: Duval, Jean-Claude, 89400 Bassou (FR); Desbordes, Jean-Yves, 41200 Romorantin Lanthenay (FR)
(74) Mandataire: Cabinet Chaillot

(57) **Abrégé**

L'invention concerne une agrafe de palissage (1) comportant une plaque (2), la plaque (2) présentant deux bords longitudinaux (3, 4) et deux bords latéraux (5) opposés deux à deux, une échancrure (6 ) étant ménagée au niveau d'un premier bord longitudinal (3), l'échancrure (6) comportant une ouverture (7) pratiquée au niveau du premier bord longitudinal (3) et se prolongeant en deux branches (9), l'agrafe de palissage (1) présentant un plan de symétrie plane coupant les premier (3) et second (4) bords longitudinaux et passant par son centre, caractérisée par le fait que l'agrafe (1) comporte en outre une partie de préhension (12) disposée au niveau du second bord longitudinal (4) de la plaque (2).

## Description

La présente invention concerne le domaine des dispositifs de palissage et porte plus particulièrement sur une agrafe de palissage utilisée pour le palissage de la vigne.

Il est connu d'utiliser des agrafes de palissage se présentant sous la forme d'une petite plaque sensiblement rectangulaire présentant une échancrure généralement en forme de T ou de Y permettant le passage de deux fils et leur solidarisation au niveau des gorges de fond de l'échancrure. De telles agrafes sont réalisées à partir de matières plastiques, de métal ou de carton et sont mises en forme par exemple par poinçonnage ou encore par découpe.

En utilisation, les agrafes sont souvent puisées manuellement depuis un contenant où elles sont stockées en vrac. Du fait qu'elles présentent une géométrie plane et rectangulaire, l'utilisateur ne ressent pas l'orientation de l'agrafe au moment de la saisir et doit bien souvent la retourner dans sa main pour orienter l'échancrure face aux fils à attacher. Cette opération constitue une perte de temps qui s'avère significative lorsqu'elle est répétée pour poser un très grand nombre d'agrafes et est en outre particulièrement peu commode sous des conditions climatiques contraignantes. Par ailleurs, lorsque les agrafes sont mises en forme par découpe, la matière retirée pour réaliser l'échancrure n'est pas utilisée et est donc perdue.

Il existe donc un besoin pour une agrafe de palissage qui soit commode de manipulation et en outre génère un minimum de déchets lors de sa fabrication.

Le Demandeur se propose donc de répondre à ces besoins par l'emploi d'une agrafe de palissage dont le corps est pourvu d'une partie de préhension. De préférence, la partie de préhension est réalisée à partir de la matière prélevée pour réaliser l'échancrure.

La présente invention a donc pour objet une agrafe de palissage comportant une plaque présentant deux bords dits longitudinaux et deux bords dits latéraux opposés deux à deux, une échancrure étant ménagée au niveau d'un premier bord longitudinal, l'échancrure comportant une ouverture pratiquée au niveau du premier bord longitudinal et se prolongeant en deux branches s'étendant dans des directions divergentes, l'agrafe de palissage présentant un plan de symétrie plane coupant les premier et second bords longitudinaux et passant par son centre, caractérisée par le fait que l'agrafe comporte en outre une partie de préhension disposée au niveau du second bord longitudinal de la plaque.

Ainsi, le fait que l'agrafe de palissage comporte une partie de préhension permet, lorsqu'elle est saisie par l'utilisateur, d'orienter directement l'agrafe dans la bonne position en vue de coincer les fils, sans autre manipulation.

La plaque, sans tenir compte de la partie de préhension, pourra, par exemple, être sensiblement rectangulaire, mais la présente invention n'est pas limitée à un tel contour. Ainsi, on entend ci-dessus par « bords longitudinaux » simplement des bords qui s'étendent globalement suivant une direction de longueur de la plaque, et par « bords latéraux » des bords qui s'étendent globalement suivant une direction de largeur de la plaque. Les bords longitudinaux et latéraux pourront ainsi être des bords courbes. Dans le cas d'une plaque sensiblement rectangulaire, les bords seront rectilignes et le plan de symétrie plane sera perpendiculaire aux bords longitudinaux.

Selon un mode de réalisation, la partie de préhension est contenue dans le plan de la plaque et présente une forme en négatif par rapport à l'échancrure. On entend par là que la forme de la partie de préhension est la forme complémentaire de celle de l'échancrure.

Selon un mode de réalisation, la partie de préhension comprend un pied s'étendant à partir de la plaque et à partir duquel s'étendent deux branches latérales orientées dans des directions divergentes.

Selon un mode de réalisation, la partie de préhension est réalisée d'un seul tenant avec la plaque.

Selon un mode de réalisation, la partie de préhension est une pièce rapportée solidarisée à la plaque.

Selon un mode de réalisation, l'agrafe de palissage est réalisée en une matière biodégradable, par exemple en bois ou en copeaux de bois compressés.

Ainsi, une telle agrafe après utilisation d'une part ne génère pas de déchets non recyclables ou bien à recycler et, d'autre part, ne pollue pas les sols.

Selon un mode de réalisation, l'ouverture présente des parois arrondies ou biseautées.

Selon un mode de réalisation, l'échancrure présente une forme de Y.

Selon un mode de réalisation, l'échancrure présente une forme de T.

Est également divulgué par la présente un procédé de fabrication d'agrafes de palissage telle que définie ci-dessus, de préférence dans laquelle la partie de préhension est réalisée d'un seul tenant avec la plaque, le procédé comprenant :
a) mettre à disposition une bande de matière ;
b) découper la bande dans le sens de la largeur selon un motif de découpe défini, de façon à obtenir une plaque ;
c) répéter l'étape b) à une distance prédéfinie de la découpe de l'étape b), de façon à obtenir une seconde plaque.

Selon un mode de réalisation, le procédé comprend la répétition des étapes b) et c).

Ainsi, le procédé ne génère pas de matière perdue puisque la matière prélevée pour l'échancrure d'une agrafe de palissage constitue la partie de préhension de l'agrafe de palissage adjacente. De cette manière, aucune matière n'est perdue ce qui rend le procédé de fabrication particulièrement avantageux aussi bien d'un point de vue économique que d'un point de vue écologique.

Pour mieux illustrer l'objet de la présente invention, on va en décrire ci-après, à titre indicatif et non limitatif, plusieurs modes de réalisation avec référence aux dessins annexés.

Sur ces dessins :
[Fig. 1] est une vue de face de l'agrafe de palissage selon un premier mode de réalisation de la présente invention.
[Fig. 2] est une vue de face de l'agrafe de palissage selon une première variante d'un second mode de réalisation de la présente invention.
[Fig. 3] est une vue de face de l'agrafe de palissage selon une seconde variante d'un second mode de réalisation de la présente invention.
[Fig. 4] est une vue en perspective en utilisation de l'agrafe de palissage selon la présente invention.

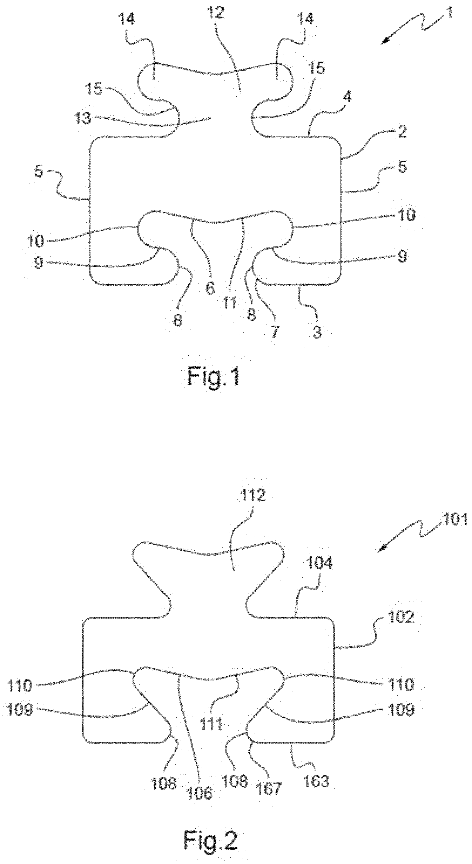

Si l'on se réfère à la Figure 1, on peut voir qu'il y est représenté une agrafe de palissage 1 selon un premier mode de réalisation. L'agrafe de palissage 1 comprend une plaque 2 qui est ici sensiblement rectangulaire, présentant deux bords longitudinaux 3, 4 et deux bords latéraux 5, opposés deux à deux. Comme de façon connue, une échancrure 6 est pratiquée dans la plaque 2 depuis un premier bord longitudinal 3. L'échancrure 6 comporte une ouverture 7 pratiquée au centre du premier bord longitudinal 3. L'ouverture 7 se prolonge entre deux parois 8 en direction du centre de la plaque 2 et se divise en deux branches 9 se terminant par des fonds 10 arrondis sous forme de gorges. Les branches 9 s'étendent dans des directions divergentes, de préférence, chacune en direction des bords latéraux 5. Selon le premier mode de réalisation représenté sur la Figure 1, l'échancrure 6 présente sensiblement une forme de Y.

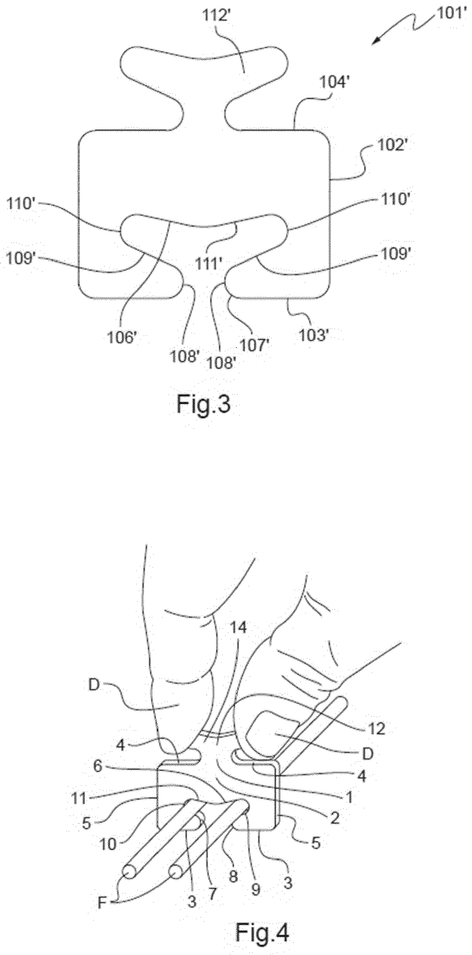

Comme de façon connue, l'agrafe de palissage est configurée pour rapprocher deux fils de palissage F, tel qu'on peut le voir sur la Figure 4. Pour ce faire, les fils F sont rapprochés et passés à travers l'ouverture 7 puis maintenus dans les fonds 10 des branches 9.

Selon le premier mode de réalisation représenté sur la Figure 1, les parois 8 de l'ouverture 7 sont arrondies de façon à présenter une surface bombée. Une telle géométrie facilite le rapprochement des fils et leur passage à travers l'ouverture 7 lors de leur insertion dans l'échancrure 6. De façon avantageuse, la distance la plus grande entre les fonds 10 est supérieure à la distance la plus courte entre les parois 8 de l'ouverture 7. Ainsi, du fait de la présence d'un col ainsi constitué entre les deux parois 8, la géométrie de l'ouverture 7 empêche également la sortie intempestive des fils F hors de l'échancrure 6.

En outre, l'échancrure 6 comporte une paroi 11, reliant les fonds 10 et en regard de l'ouverture 7. Selon le mode de réalisation représenté sur la Figure 1, la paroi 11 est courbe et pointe en direction du centre de l'ouverture 7. Une telle géométrie contribue également au guidage et au maintien des fils de palissage F dans les fonds 10 des branches 9.

L'agrafe de palissage 1 selon la présente invention comporte une partie de préhension 12. La partie de préhension 12 est contenue dans le plan de la plaque 2, est disposée centrée au niveau du second bord longitudinal 4 de la plaque 2, opposé au premier bord longitudinal 3. Comme on peut le voir sur la Figure 1, la partie de préhension 12 comporte un pied 13 s'étendant depuis le second bord longitudinal 4 et deux branches 14 orientées dans des directions divergentes.

La saisie et la manipulation de l'agrafe de palissage 1 est permise par l'intermédiaire de la partie de préhension 12, comme on peut le voir sur la Figure 4 où les doigts D de l'utilisateur tiennent l'agrafe par ses branches 14.

Grâce à la présence de la partie de préhension 12, l'utilisateur peut saisir immédiatement l'agrafe de palissage 1 dans l'orientation adaptée à la pose, sans même avoir besoin de la voir et, par conséquent réaliser dans la foulée la pose de l'agrafe de palissage 1. Ainsi, l'agrafe de palissage 1 selon la présente invention est commode à utiliser et permet en utilisation de générer un gain de temps particulièrement appréciable pour l'utilisateur.

Par ailleurs, et de façon générale, la partie de préhension 12 présente une forme en négatif par rapport à l'échancrure 6.

Selon le mode réalisation représenté sur la Figure 1, l'agrafe de palissage 1 présente un plan de symétrie perpendiculaire aux bords longitudinaux 3, 4 et passant par son centre.

De façon préférée, l'agrafe de palissage 1 selon le premier mode de réalisation présente une longueur de 35 mm, une largeur de 30 mm et une épaisseur de 3 mm, la tolérance étant de ± 0,5 mm. La largeur de la plaque 2 est de 20 mm. Au niveau de la paroi 11, l'angle formé par les branches 9 est de 155°. En outre, la distance la plus courte entre les parois 8 de l'ouverture 7 est de 10 mm et la distance la plus grande entre les fonds 10 des branches 9 est de 20 mm.

Il convient de noter que la partie de préhension pourra présenter une forme différente d'un négatif de l'échancrure 6 pour autant qu'elle assure la fonction de permettre la saisie de l'agrafe de palissage.

Il convient cependant de noter que pour réaliser la partie de préhension 12 comme décrit ci-après, il est particulièrement avantageux d'utiliser la matière prélevée pour réaliser l'échancrure 6.

L'agrafe de palissage 1 selon la présente invention peut être réalisée, par exemple en métal, en matière plastique, en une matière comprenant du bois, et de manière particulièrement préférée, en matières biodégradables comme le bois ou des copeaux de bois compressés. La présente invention n'est toutefois pas limitée à l'utilisation d'une matière spécifique.

Sur la Figure 2, on peut voir qu'il y est représenté une agrafe de palissage 101 selon une première variante d'un second mode de réalisation. L'agrafe de palissage 101 est similaire à l'agrafe de palissage 1 selon le premier mode de réalisation décrite ci-dessus. Les éléments de l'agrafe de palissage identiques ou analogues aux éléments de l'agrafe de palissage du premier mode de réalisation, et décrits en référence à la Figure 2, porteront le même chiffre de référence augmenté de 100, et ne seront pas décrits plus en détail ici.

L'agrafe de palissage 101 selon la première variante du second mode de réalisation diffère de l'agrafe de palissage 1 selon le premier mode de réalisation par la géométrie de l'échancrure 106, et par conséquent de la partie de préhension 112 puisque la partie de préhension 112 présente comme pour le premier mode de réalisation une forme en négatif par rapport à l'échancrure 106.

Selon la première variante du second mode de réalisation, l'échancrure 106 présente sensiblement une forme de Y.

De façon préférée, l'agrafe de palissage 101 selon la première variante du second mode de réalisation présente une longueur de 50 mm, une largeur de 40 mm et une épaisseur de 3 mm, la tolérance étant de ± 0,5 mm. La largeur de la plaque 102 est de 25 mm. La distance entre le premier bord longitudinal 103 et le point de l'échancrure 106 le plus éloigné du premier bord longitudinal 103 est de 15 mm. Au niveau de la paroi 111, l'angle formé par les branches 109 est de 155°. En outre, la distance la plus courte entre les parois 108 de l'ouverture 107 est de 15 mm et la distance la plus grande entre les fonds 110 des branches 109 de l'échancrure 106 est de 30 mm.

Sur la Figure 3, on peut voir qu'il y est représenté une agrafe de palissage 101' selon une seconde variante du second mode de réalisation.

L'agrafe de palissage 101' selon la seconde variante du second mode de réalisation diffère de l'agrafe de palissage 101 selon de la première variante du second mode de réalisation par la géométrie de l'échancrure 106', et par conséquent de la partie de préhension 112' puisque la partie de préhension 112' présente comme pour la première variante du second mode de réalisation une forme en négatif par rapport à l'échancrure 106'.

Selon la seconde variante du second mode de réalisation, l'échancrure 106' présente également sensiblement une forme de Y.

De façon préférée, l'agrafe de palissage 101' selon la seconde variante du second mode de réalisation présente une longueur de 30 mm, une largeur de 30 mm et une épaisseur de 3 mm, la tolérance étant de ± 0,5 mm. La largeur de la plaque 102' est de 20 mm. La distance entre le premier bord longitudinal 103' et le point de l'échancrure 106' le plus éloigné du premier bord longitudinal 103 est de 10 mm. Au niveau de la paroi 111', l'angle formé par les branches 109' est de 155°. En outre, la distance la plus courte entre les parois 108' de l'ouverture 107' est de 5 mm et la distance la plus grande entre les fonds 110' des branches 109' de l'échancrure 106' est de 20 mm.

Sur la Figure 4, on peut voir qu'il y est représenté une agrafe de palissage 1 selon la présente invention en utilisation, en fin d'opération de pose/début d'opération de dépose. Les doigts D de l'utilisateur prennent en sandwich la partie de préhension 12 au niveau des extrémités des branches 14 et les fils F sont maintenus dans les fonds 10 des branches 9 de l'échancrure 6.

La présente invention a également pour objet un procédé de fabrication d'une agrafe de palissage 1, 101 selon la présente invention.

Le procédé comprend les étape suivantes :
a) mettre à disposition une bande de matière ;
b) découper la bande dans le sens de la largeur selon un motif de découpe défini ;
c) répéter l'étape b) à une distance prédéfinie de la découpe de l'étape b).

Ainsi, les agrafes de palissage 1, 101, 101' sont réalisées par découpes successives dans une bande. La ligne de découpe dans le sens de la largeur et allant d'un bord à l'autre de la bande délimite alors l'échancrure 6, 106, 106' d'une première agrafe de palissage 1, 101, 101' et la partie de préhension 12, 112, 112' d'une seconde agrafe de palissage 1, 101, 101' adjacente, à la manière d'un puzzle. Ainsi, la matière prélevée pour l'échancrure 6, 106, 106' d'une agrafe de palissage 1, 101, 101' constitue la partie de préhension 12, 112, 112' de l'agrafe de palissage 1, 101, 101' adjacente dans l'ordre successif de découpe dans la bande. De cette manière, aucune matière n'est perdue ce qui rend le procédé de fabrication particulièrement avantageux aussi bien d'un point de vue économique que d'un point de vue écologique.

Il convient de noter que la partie de préhension 12, 112, 112' peut être obtenue à partir de la partie de la plaque 2, 102, 102' découpée pour réaliser l'échancrure 6, 106, 106'. Pour ce faire, une découpe est réalisée dans une plaque 2, 102, 102' selon un motif d'échancrure 6, 106, 106' prédéfini. Puis la chute résultante est rapportée au niveau du second bord longitudinal 4, 104, 104' de la plaque 2, 102, 102', le bord de la chute correspondant initialement au premier bord longitudinal 3, 103, 103' de la plaque 2, 102, 102' étant amené en regard du second bord longitudinal 4, 104, 104' de la plaque 2, 102, 102'. Puis la chute est solidarisée à la plaque 2, 102, 102' par tous moyens adaptés, par collage par exemple, pour constituer la partie de préhension 12, 112, 112'.

Il est bien entendu que les modes de réalisation qui viennent d'être décrits ont été donnés à titre indicatif et non limitatif et que des modes de réalisation peuvent y être apportés sans que l'on s'écarte pour autant du cadre de la présente invention.

## Revendications

1. Agrafe de palissage (1 ; 101 ; 101') comportant une plaque (2 ; 102 ; 102') présentant deux bords dits longitudinaux (3, 4 ; 103, 104 ; 103', 104') et deux bords dits latéraux (5) opposés deux à deux, une échancrure (6 ; 106 ; 106') étant ménagée au niveau d'un premier bord longitudinal (3 ; 103 ; 103'), l'échancrure (6 ; 106 ; 106') comportant une ouverture (7 ; 107 ; 107') pratiquée au niveau du premier bord longitudinal (3 ; 103 ; 103') et se prolongeant en deux branches (9 ; 109 ; 109') s'étendant dans des directions divergentes, l'agrafe de palissage (1 ; 101 ; 101') présentant un plan de symétrie plane coupant les premier (3 ; 103 ; 103') et second (4 ; 104 ; 104') bords longitudinaux et passant par son centre, **caractérisée par le fait que** l'agrafe (1 ; 101 ; 101') comporte en outre une partie de préhension (12 ; 112 ; 112') disposée au niveau du second bord longitudinal (4 ; 104 ; 104') de la plaque (2 ; 102 ; 102').

2. Agrafe de palissage (1 ; 101 ; 101') selon la revendication 1, **caractérisée par le fait que** la partie de préhension (12 ; 112 ; 112') est contenue dans le plan de la plaque (2 ; 102 ; 102') et présente une forme en négatif par rapport à l'échancrure (6 ; 106 ; 106').

3. Agrafe (1 ; 101 ; 101') selon la revendication 2, **caractérisée par le fait que** la partie de préhension (12 ; 112 ; 112') comprend un pied (13) s'étendant à partir de la plaque (2 ; 102 ; 102') et à partir duquel s'étendent deux branches latérales (14) orientées dans des directions divergentes.

4. Agrafe de palissage (1 ; 101 ; 101') selon l'une quelconque des revendications 1 à 3, **caractérisée par le fait que** la partie de préhension (12 ; 112 ; 112') est réalisée d'un seul tenant avec la plaque (2 ; 102 ; 102').

5. Agrafe de palissage selon l'une quelconque des revendications 1 à 4, **caractérisée par le fait que** la partie de préhension est une pièce rapportée solidarisée à la plaque.

6. Agrafe de palissage (1 ; 101 ; 101') selon l'une quelconque des revendications 1 à 5, **caractérisée par le fait que** l'agrafe de palissage (1 ; 101 ; 101') est réalisée en une matière biodégradable, par exemple en bois ou en copeaux de bois compressés.

7. Agrafe de palissage (1 ; 101 ; 101') selon l'une quelconque des revendications 1 à 6, **caractérisée par le fait que** l'ouverture (7 ; 107 ; 107') présente des parois arrondies.

8. Agrafe de palissage (1 ; 101 ; 101') selon l'une quelconque des revendications 1 à 7, **caractérisée par le fait que** l'échancrure (6 ; 106 ; 106') présente une forme de Y.

9. Agrafe de palissage selon l'une quelconque des revendications 1 à 8, **caractérisée par le fait que** l'échancrure présente une forme de T.
